# EUROPÄISCHE PATENTSCHRIFT

(11) **EP 3 785 539 B1**
(45) Veröffentlichungstag und Bekanntmachung des Hinweises auf die Patenterteilung: **03.11.2021**
(21) Anmeldenummer: 20188848.4
(22) Anmeldetag: 31.07.2020
(51) Int. Cl.: A01M 25/00

(54) **KÖDERBOX-ANORDNUNG FÜR RATTEN**
RAT BAIT BOX
BOÎTE D'APPÂT POUR RAT

(30) Priorität: 23.08.2019 DE 102019122713
(43) Veröffentlichungstag der Anmeldung: 03.03.2021
(73) Patentinhaber: Vollack, Andreas, 34359 Reinhardshagen (DE)
(72) Erfinder: Vollack, Andreas, 34359 Reinhardshagen (DE)
(74) Vertreter: Reiser & Partner Patentanwälte mbB

(56) Entgegenhaltungen:
- EP-A1- 3 238 538
- DE-U1-202015 002 462

## Beschreibung

Die Erfindung betrifft eine Köderbox-Anordnung, umfassend eine Köderbox mit einem rohrförmigen Gehäuse, welches an einer Seite eine Einstiegsöffnung für Nagetiere aufweist und an der anderen Seite durch einen Deckel verschlossen ist, wobei dem Deckel eine Aufnahmeeinrichtung für Giftköder zugeordnet ist.

Städte, Gemeinde und Kommunen führen in abwassertechnischen Anlagen kontinuierlich eine Rattenbekämpfung durch. Abwassertechnische Anlagen sind beispielsweise Kläranlagen und Abwasserkanäle. Zur Rattenbekämpfung werden mit Giftstoffen versetzte Giftköder verwendet. Dabei soll vermieden werden, dass die Giftsubstanzen des Köders in das Abwasser gelangen, weil die Giftsubstanzen zu einem Großteil in Kläranlagen nicht abgebaut werden können. Daher werden zum Auslegen der Giftköder Köderboxen verwendet, wobei die Giftköder in den Köderboxen so befestigt werden, dass die Nagetiere die Giftköder nicht verschleppen können.

Eine derartige Köderbox ist beispielsweise aus der EP 3 238 538 A1 bekannt. Die vorbekannte Köderbox weist ein rohrförmig ausgebildetes Gehäuse auf, welches in gebrauchsfertigem Zustand lediglich an einer Seite eine Öffnung aufweist, welche eine Einstiegsöffnung für Nagetiere bildet. Die Einstiegsöffnung weist in Richtung des Untergrundes, beziehungsweise in Richtung des Wasserspiegels des Abwasserkanals. Steigt der Wasserspiegel innerhalb des Abwasserkanals, gelangt das Abwasser bis an die Köderbox und die Köderbox taucht in das Abwasser ein. Dadurch, dass die Köderbox lediglich einseitig geöffnet ist, kann das Abwasser aber nicht vollständig in die Köderbox eindringen, weil sich innerhalb der Köderbox ein Luftpolster ausbildet, welches das Eindringen von Abwasser verhindert.

Damit die Köderbox beziehungsweise der Verbrauch des in der Köderbox aufgenommenen Giftköders regelmäßig kontrolliert werden kann, ist es erforderlich, die Köderbox und den darin angeordneten Giftköder zu befestigen, damit die zu bekämpfenden Nagetiere weder Köderbox noch Giftköder verschleppen. Hierzu wird die aus dem Stand der Technik bekannte Köderbox ortsfest, beispielsweise in einem Abwassersystem, installiert. Bei der aus dem Stand der Technik bekannten Köderbox ist der Giftköder in einen Deckel eingeklebt, welcher in einem T-förmigen Abzweig angeordnet ist. Dies erschwert den Zugang und damit die Kontrolle beziehungsweise den Austausch des Giftköders. So kann es je nach Art der Montage erforderlich sein, zur Kontrolle und zum Austausch des Giftköders in einen Abwasserschacht hinabzusteigen. Dies geht mit einer erhöhten Unfallgefahr und damit erhöhten Sicherheitsbestimmungen einher.

Der Erfindung liegt die Aufgabe zugrunde, eine Köderbox-Anordnung bereitzustellen, welche eine einfache Wartung und einen einfachen Austausch des Giftköders ermöglicht.

Diese Aufgabe wird mit den Merkmalen von Anspruch 1 gelöst. Auf vorteilhafte Ausgestaltungen nehmen die Unteransprüche Bezug.

Die erfindungsgemäße Köderbox-Anordnung umfasst eine Köderbox mit einem rohrförmigen Gehäuse, welches an einer Seite eine Einstiegsöffnung für Nagetiere aufweist und an der anderen Seite durch einen Deckel verschlossen ist, wobei dem Deckel eine Aufnahmeeinrichtung für Giftköder zugeordnet ist, wobei die Köderbox-Anordnung derart in einer abwassertechnischen Anlage montierbar ist, dass die eine Seite dem Flüssigkeitsspiegel des in der abwassertechnischen Anlage geführten Abwassers zugewandt ist und dass die andere Seite mit dem Deckel samt Aufnahmeeinrichtung in die entgegengesetzte Richtung weist.

Bei der erfindungsgemäßen Köderbox-Anordnung weist die Einstiegsöffnung für Nagetiere in Richtung des Abwasserspiegels oder taucht - bei höherem Abwasserstand - in das Abwasser ein. Dadurch, dass die andere Seite durch einen Deckel verschlossen ist, kann das Abwasser aber das Gehäuse nicht vollständig fluten. Es verbleibt ein Luftraum, in welchem sich unter anderem auch der dem Deckel zugeordnete Giftköder befindet. Der Giftköder gelangt daher nicht in Kontakt mit dem Abwasser.

Der Deckel mit dem Giftköder weist bei der erfindungsgemäßen Anordnung entgegen des Abwasserspiegeis, also nach oben, in Richtung der Oberfläche. Der Deckel mit der Aufnahmeeinrichtung ist auf einem freien Ende eines senkrecht verlaufenden Abschnittes des Gehäuses aufgesetzt. Dadurch kann der Deckel mit der Aufnahmeeinrichtung zur Kontrolle und zum Austausch des Giftköders von der Oberfläche her erreicht werden, beispielsweise über einen in einer Straße oder einem Gehweg befindlichen Kanaldeckel.

Der Giftköder ist dem Deckel zugeordnet und kann gleichzeitig mit dem Deckel aus der Köderbox entnommen werden. Zur Überprüfung, zur Wartung und zum Austausch des Giftköders ist es daher lediglich erforderlich, den Deckel zu entnehmen. Der Giftköder beziehungsweise die Aufnahmeeinrichtung entfernt sich gleichzeitig mit dem Deckel.

Die Aufnahmeeinrichtung ist so ausgebildet, dass Giftköder in der Aufnahmeeinrichtung für Nagetiere leicht erreichbar platziert und dort auch befestigt werden können, damit Nagetiere die in der Aufnahmeeinrichtung platzierten Giftköder nicht verschleppen können. Hierzu kann die Aufnahmeeinrichtung beispielsweise in Form eines Käfigs ausgebildet sein. Alternativ kann die Aufnahmeeinrichtung auch in Form einer L-förmig ausgebildeten Lasche ausgebildet sein oder eine Anordnung aus Drähten aufweisen.

Der Deckel verschließt die der Einstiegsöffnung gegenüberliegende Öffnung des rohrförmigen Gehäuses so, dass beim Ansteigen des Abwasserspiegels in dem Abwasserkanal, in welchem die Köderbox installiert ist, kein Abwasser an den Giftköder gelangen kann. Dabei kann die Köderbox mit der Einstiegsöffnung in das Abwasser eintauchen.

Das Gehäuse weist zumindest zwei bogenförmige Abschnitte auf. Dadurch bildet sich in dem rohrförmigen Gehäuse eine Labyrinthstruktur aus. Dies erleichtert den Nagetieren den Zugang in die Köderbox und es ergibt sich auch eine bessere Trennung von Giftköder und Abwasserspiegel. Des Weiteren bildet sich eine verwinkelte Futterkammer mit waagerechten und senkrechten Abschnitten, in welcher Nagetiere den Giftköder geschützt und ohne Störung aufnehmen können.

Die Köderbox ist mit einer Befestigungseinrichtung zum Befestigen der Köderbox in dem Abwassersystem versehen. Die Befestigungseinrichtung kann gemäß einer vorteilhaften Ausgestaltung eine oder mehrere Befestigungsschellen umfassen, welche die Köderbox umgreifen und mittels einer Schraubvorrichtung in dem Abwassersystem, beispielsweise in dem Abwasserschacht, befestigt werden können. Die Befestigung erfolgt vorzugsweise mittels einer Schraubverbindung, wobei eine Bohrschablone vorgesehen sein kann, welche ein einfaches und schnelles Einbringen von Bohrlöchern beispielsweise in einen Kanalschacht ermöglicht.

Gemäß einer vorteilhaften Ausgestaltung ist die Befestigungseinrichtung zur Befestigung der Köderbox an aus dem Abwassersystem hervorstehenden Einrichtungen eingerichtet. Dazu kann die Befestigungseinrichtung Befestigungselemente aufweisen, die eine oder mehrere Einrichtungen hintergreifen. Dadurch ist die Köderbox ortsfest, formschlüssig und lösbar in dem Abwassersystem fixiert und es kann verhindert werden, dass Nagetiere die Köderbox verschleppen.

Schächte von Abwassersystemen sind häufig mit Steighilfen versehen. Eine vorteilhafte Befestigungseinrichtung ist zur Befestigung an der Steighilfe ausgerüstet. Steighilfen sind beispielsweise U-förmig ausgebildete Steigeisen, welche fest in dem Schacht montiert sind. Die Befestigungseinrichtung kann dabei mit Halteklammern ausgerüstet sein, welche ein oder mehrere Steigeisen umgreifen. Dabei ist die Köderbox besonders fest montiert, wenn die Halterklammern zwei beabstandet voneinander montierte Steigeisen formschlüssig umgreifen.

Die Halteklammern können dabei verschiebbar an einer Haltestange befestigt sein, so dass die Halteklammern an den Abstand der Steigeisen angepasst werden können. Die Köderbox kann direkt an der Haltestange oder über einen Adapter an der Haltestange befestigt sein.

In einer vorteilhaften Ausgestaltung weist die Köderbox zwei bogenförmige Abschnitte mit einem Winkel von jeweils 85° bis 95°, vorzugsweise von 88,5° auf. Bei dieser Ausgestaltung weist das rohrförmige Gehäuse zwei senkrecht verlaufende Abschnitte und einen zwischen den senkrechten Abschnitten angeordneten waagerechten Abschnitt auf. Dies ist besonders vorteilhaft, weil sich durch den waagerechten Abschnitt ein Plateau bildet, welches herabfallende Partikel des Giftköders aufnehmen kann, so dass diese nicht in das Abwasser herabfallen.

Um das Rückhaltevermögen für herabfallende Köderpartikel zu verbessern, kann dem rohrförmigen Gehäuse eine Rückhalteeinrichtung zugeordnet sein. Gemäß einer vorteilhaften Ausgestaltung ist die Rückhalteeinrichtung in Form einer zylindrischen Halbschale ausgebildet, welche innenseitig in das Gehäuse, bevorzugt in den waagerechten Abschnitt, eingesetzt ist. Die Rückhalteeinrichtung ist dabei vorzugsweise so in dem Gehäuse angeordnet, dass diese bei abgenommenem Deckel kontrollierbar ist und beispielsweise bei einer Wartung von der Oberfläche eines Kanalschachtes eingesehen werden kann.

Vorzugsweise ist der Rückhalteeinrichtung ein Kondensatablauf zugeordnet. Der Kondensatablauf kann dabei aus zylindrischen Halbschalenelementen bestehen, welche im unteren Bereich voneinander beabstandet sind und einen schmalen Kanal begrenzen, so dass dort Kondensat abfließen kann. In abwassertechnischen Anlagen herrschen je nach Wetterlage und Nutzung sehr stark wechselnde klimatische Bedingungen mit stark schwankenden Temperaturen und schwankender Luftfeuchtigkeit. Dies führt zu einem erhöhten Anfall von Kondensation, wobei das Kondensat über den Kondensatablauf abgeführt werden kann.

In die senkrechten Abschnitte des rohrförmigen Gehäuses können Aufstiegshilfen in Form von innenseitig angebrachten Erhebungen angeordnet sein. Diese erleichtern den Nagetieren den Aufstieg innerhalb der Köderbox.

Der Deckel ist vorzugsweise als Schraubdeckel ausgebildet. Dadurch ist gewährleistet, dass der Deckel fest mit dem rohrförmigen Gehäuse verbunden ist und gleichzeitig einfach entnehmbar ist.

Vorzugsweise weist der Deckel eine Dichtung auf, welche bei aufgeschraubtem Deckel zur Anlage an das Gehäuse gelangt. Dadurch ergibt sich ein luftdichter Verschluss zwischen Deckel und Gehäuse, so dass sich innerhalb des Gehäuses ein Luftpolster ausbilden kann, welches das Eindringen von Abwasser in das Gehäuse verhindert, obwohl das Gehäuse an der Einstiegsöffnung offen und für Nagetiere stets zugänglich ist.

Der Deckel kann außenseitig Formschlusselemente aufweisen. Diese ermöglichen ein einfaches und sicheres Entnehmen beziehungsweise Aufsetzen des Deckels.

Der Deckel kann ein Halteelement aufweisen. Das Halteelement ist dazu geeignet, mit einem weiteren Halteelement in Eingriff zu gelangen, was ein einfacheres Entnehmen des Deckels ermöglicht. Das Halteelement kann beispielsweise als Magnet oder magnetisierbare Metallplatte ausgebildet sein. Alternativ kann das Halteelement auch ein Klebe- oder ein Klettelement sein oder über eine Laschenverbindung realisiert sein.

Vorzugsweise umfasst die Köderbox-Anordnung eine Entnahmeeinheit zum Entnehmen des Deckels mit der Aufnahmeeinrichtung für Giftköder.

Die Entnahmeeinheit ermöglicht es, über einen Fernzugriff den Deckel von dem Gehäuse zu entnehmen. Dadurch ist es insbesondere nicht erforderlich, die gesamte Köderbox aus dem Abwassersystem beziehungsweise dem Abwasserschacht zu entnehmen oder in einen Abwasserschacht hinabzusteigen. Es ist lediglich erforderlich, den Deckel zu entnehmen. Durch die Anordnung des Deckels, welcher bei der erfindungsgemäßen Anordnung in Richtung der Oberfläche der abwassertechnischen Anlage weist, ist ein Fernzugriff möglich. Dadurch, dass die Aufnahmeeinrichtung samt Giftköder dem in Richtung der Oberfläche weisenden Deckel zugeordnet ist, entfernt sich die Aufnahmeeinrichtung mit Giftköder zusammen mit dem Deckel aus dem Gehäuse. Dadurch kann die Aufnahmeeinrichtung einfach kontrolliert werden und der Giftköder kann einfacher ausgetauscht werden.

Beispielsweise ist mittels der Entnahmeeinheit die Entnahme des Deckels samt Aufnahmeeinrichtung von der Oberfläche möglich. Im Fall eines Kanalschachtes ist es lediglich erforderlich, den Kanaldeckel von dem Kanalschacht zu entnehmen. Anschließend wird die Entnahmeeinheit von der Oberfläche aus in den Kanalschacht eingeführt und auf den Deckel aufgesetzt. Vorzugsweise ist die Entnahmeeinheit so ausgebildet, dass diese formschlüssig in das Formschlusselement des Deckels eingreift. Gemäß einer ersten Ausgestaltung kann der Deckel außenseitig über den Umfang verteilt rippenförmige Vorsprünge aufweisen. Die Entnahmeeinheit weist bei dieser Ausgestaltung innenseitig entsprechende Vertiefungen auf, in welche die rippenförmigen Vorsprünge eingreifen können. Wird die Entnahmeeinheit auf den Deckel aufgesetzt und in Rotation versetzt, wird der beispielsweise als Schraubdeckel ausgebildete Deckel von dem rohrförmigen Gehäuse abgeschraubt. Das Aufsetzen des Deckels erfolgt analog in umgekehrter Reihenfolge.

Die Entnahmeeinheit kann ein weiteres Halteelement aufweisen, welches mit dem Halteelement des Deckels zusammenwirkt. Beispielsweise kann das weitere Halteelement als Magnet oder Metallplatte ausgebildet sein. Wird die Entnahmeeinheit auf den Deckel aufgesetzt, greifen die Halteelemente ineinander ein, so dass Deckel und Entnahmeeinheit miteinander verbunden sind und der Deckel zusammen mit der Entnahmeeinheit von dem Gehäuse abgehoben werden kann, so dass verhindert werden kann, dass der Deckel herabfällt.

Der Entnahmeeinheit kann eine Stange zugeordnet sein. Diese ermöglicht die Anordnung von Köderboxen im unteren Bereich eines Abwasserschachtes, welcher für Nagetiere einfacher erreichbar ist. Mittels der Stange wird die Entnahmeeinheit auf dem Deckel platziert und durch Drehen der Stange wird der Deckel von dem Gehäuse abgedreht. Über die Halteelemente ist der Deckel an die Entnahmeeinheit angebunden und kann gemeinsam mit der Entnahmeeinheit entfernt werden.

Gemäß einer vorteilhaften Ausgestaltung ist die Stange teleskopierbar. Bei dieser Ausgestaltung weist die Stange zwei Stangenteile auf, wobei ein erstes Stangenteil in ein zweites Stangenteil eingeschoben ist und wahlweise herausgezogen oder eingeschoben werden kann. Dadurch kann die Stange auf eine gewünschte Länge eingestellt werden.

Eine erfindungsgemäße Ausgestaltung der Köderbox-Anordnung wird nachfolgend anhand der Figuren näher erläutert. Diese zeigen, jeweils schematisch:
Fig. 1 eine Köderbox-Anordnung als Explosionsdarstellung;
Fig. 2 eine Bohrschablone;
Fig. 3 eine Köderbox-Anordnung mit Befestigungseinrichtung.

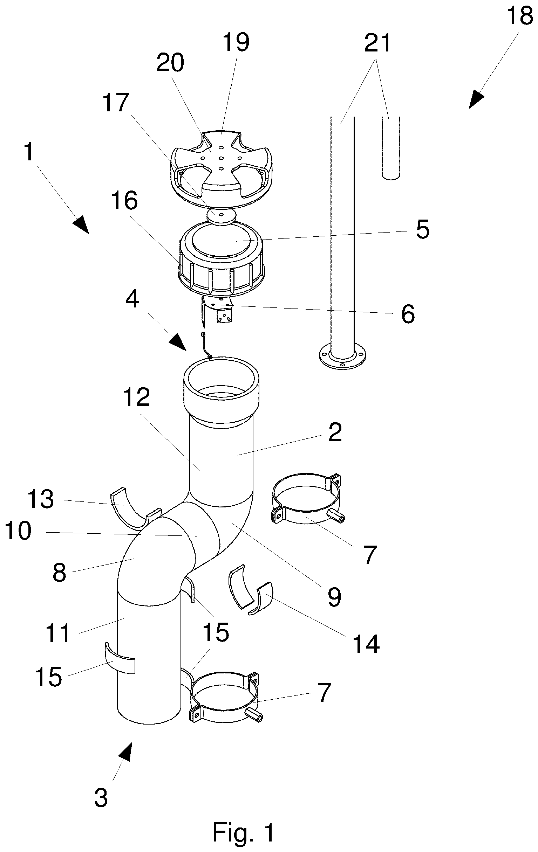

Figur 1 zeigt eine Köderbox 1 mit einem rohrförmigen Gehäuse 2 aus Kunststoff, welches an einer Seite 3 offen ist und eine Einstiegsöffnung für Nagetiere aufweist. An der anderen Seite 4 ist das Gehäuse 2 durch einen Deckel 5 verschlossen. Dem Deckel 5 ist eine Aufnahmeeinrichtung 6 für Giftköder zugeordnet. Die Aufnahmeeinrichtung 6 ist fest an der Innenseite des Deckels 5 befestigt und aus metallischem Werkstoff ausgebildet. Die Aufnahmeeinrichtung 6 ist in Form einer Draht-Befestigungseinrichtung ausgebildet, so dass der Giftköder fest mit dem Deckel 5 verbunden ist und von Nagetieren nicht verschleppt werden kann.

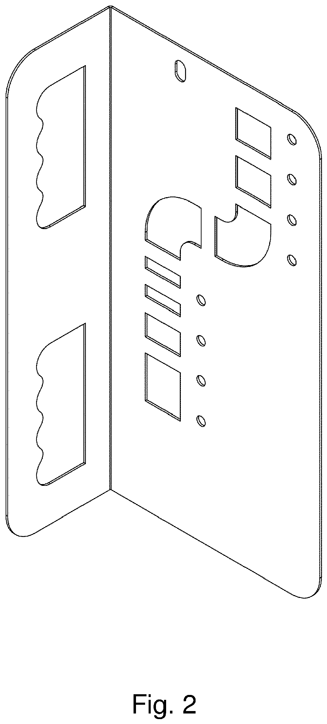

Das Gehäuse 2 kann mittels einer aus Rohrschellen ausgebildeten Befestigungseinrichtung 7 fest in einem Abwassersystem, vorzugsweise in einem Kanalschacht, befestigt werden. Die Befestigung erfolgt vorzugsweise mittels einer Schraubverbindung. Hierzu kann die in Figur 2 gezeigte Bohrschablone verwendet werden.

Das Gehäuse 2 weist zwei senkrecht verlaufende Abschnitte 11, 12 und einen waagerecht verlaufenden Abschnitt 10 auf. Zwischen den senkrecht verlaufenden Abschnitten 11, 12 und dem waagerecht verlaufendem Abschnitt 10 ist jeweils ein bogenförmiger Abschnitt 8, 9 angeordnet. Die bogenförmigen Abschnitte sind in Form von 88,5°-Bogenelementen ausgebildet. Denkbar sind aber auch bogenförmige Abschnitte mit einem Winkel von 90°.

Es ist denkbar, dass das Gehäuse aus einzelnen Segmenten ausgebildet ist und Bogensegmente und gerade Segmente umfasst. Die Segmente sind vorzugsweise dicht, insbesondere wasserdicht, miteinander verbunden. Dazu können die Segmente verklebt oder verschweißt sein. Die Segmente können auch einstückig sein.

Dem waagerechten Abschnitt 10 ist eine Rückhalteeinrichtung 13 in Form einer Halbschale zugeordnet, welche im Inneren des waagerechten Abschnittes 10 angeordnet ist. In dem waagerechten Abschnitt 10 ist ferner ein Kondensatablauf 14 angeordnet. Der Kondensatablauf 14 besteht aus zylindrischen Halbschalenelementen, welche im unteren Bereich voneinander beabstandet sind und einen schmalen Kanal begrenzen, so dass dort Kondensat abfließen kann. In dem senkrechten Abschnitt 11 sind mehrere, in dieser Ausgestaltung drei, Aufstiegshilfen 15 angeordnet, welche ebenfalls aus Halbschalenelementen bestehen.

Der Deckel 5 ist als Schraubdeckel ausgebildet und weist innenseitig eine Dichtung auf, welche bei aufgeschraubtem Deckel 5 zur Anlage an das Gehäuse 2 gelangt. Außenseitig weist der Deckel 5 Formschlusselemente 16 in Form von über den Umfang verteilten rippenförmigen, in axialer Richtung verlaufenden Vorsprüngen auf. Der Deckel 5 weist ferner ein Halteelement 17 in Form einer magnetisierbaren Metallscheibe auf, welches auf dem scheibenförmigen Abschnitt des Deckels 5 befestigt ist.

Die Köderbox-Anordnung 18 umfasst neben der zuvor beschriebenen Köderbox 1 eine Entnahmeeinheit 19 zum Entnehmen des Deckels 5 mit der Aufnahmeeinrichtung 6.

Die Entnahmeeinheit 19 ist so ausgebildet, dass diese formschlüssig in die Formschlusselemente 16 des Deckels 5 eingreift. Die Entnahmeeinheit 19 ist glockenförmig ausgebildet und umgreift zum Entnehmen beziehungsweise Aufsetzen des Deckels 5 den Deckel 5. Im Inneren der Entnahmeeinheit 19 ist ein weiteres Halteelement 20 angeordnet, welches sich nach Aufsetzen der Entnahmeeinheit 19 auf den Deckel 5 mit dem Halteelement 17 verbindet. Das weitere Halteelement 20 ist ein scheibenförmig ausgebildeter Permanentmagnet. Der Entnahmeeinheit 19 ist eine Stange 21 zugeordnet. Die Stange 21 ist teleskopierbar und weist zwei ineinandersteckbare Stangenelemente auf.

Die Entnahmeeinheit 19 ermöglicht die Entnahme des Deckels 5 einer tief in einem Kanalschacht montierten Köderbox 1. Die Entnahmeeinheit 19 ermöglicht dabei einen Fernzugriff über die Oberfläche des Kanalschachtes, also vom Straßenniveau des Kanalschachtes.

Der Deckel 5 ist mit einer Kennzeichnung versehen, welche eine eindeutige Zuordnung des Deckels 5 ermöglicht. Hierzu ist der Deckel 5 mit einem Barcode versehen. Alternativ kann der Deckel 5 mit einem RFID-Chip versehen sein. Die Kennzeichnung vereinfacht die Dokumentation der Köderbox 1, beziehungsweise eine Dokumentation zu den aus der Köderbox 1 entnommenen Giftködern.

Im Rahmen der Kontrolle wird die Kennzeichnung ausgelesen. Durch diese Automatisierung ist eine verbesserte Dokumentation möglich. Dabei können verschiedene Daten erfasst werden, beispielsweise die Person, die die Kontrolle durchführt, die Position der Köderbox 1, die Nummer des Kanalschachtes, das Datum der Kontrolle, der Wirkstoff des in die Köderbox 1 eingesetzten Giftköders, eine Köderbeschreibung, die Ködermenge, die Schadnagerbefallstärke in Prozent (diese kann aus einer entnommenen Ködermenge abgeleitet werden, welche in Prozent angegeben werden kann, beispielsweise eine Entnahmemenge von 0%, 25%, 50%, 75% oder 100%), die ausgeführte(n) Maßnahme(n) (Kontrolle durchgeführt, Giftköder gewechselt, giftfreie Rattenköder für Monitoring eingebaut).

Insgesamt ist dadurch auch ein Monitoring zur Befallsermittlung und zur Lokalisierung von Schadnagerbefall möglich. Dadurch ist es möglich, nur in den Bereichen Giftköder auszulegen, in welchen ein Befall vorhanden ist.

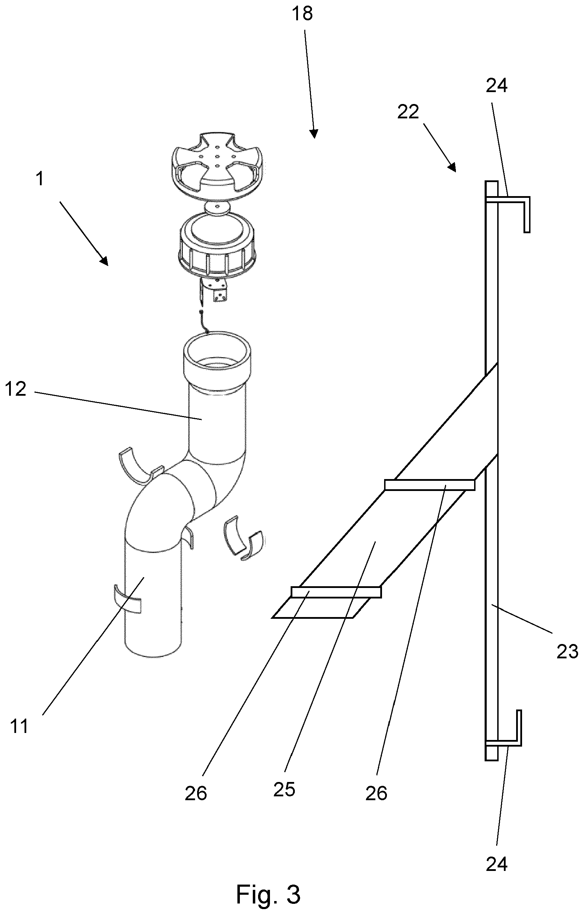

Figur 3 zeigt eine Köderbox-Anordnung 18 mit einer Köderbox 1 wie zuvor beschrieben. Bei der vorliegenden Ausgestaltung ist die Köderbox 1 mittels einer Befestigungseinrichtung 22 in einem Schacht eines Abwassersystems befestigt. Die Befestigungseinrichtung 22 weist eine Haltestange 23 und zwei verschiebbar an der Haltestange 23 befestigte Halteklammern 24 auf. Dabei ist die Köderbox 1 über einen Adapter 25 an der Haltestange 23 festgelegt. An dem Adapter 25 sind Halter 26 in Form von Halbschalen festgelegt. Zum Befestigen der Köderbox 1 umgreifen die Halter 26 das Gehäuse 2, wobei bei der vorliegenden Ausgestaltung zwei Halter 26 vorgesehen sind, die jeweils an einem senkrechten Abschnitt 11, 12 des Gehäuses 2 anliegen. Damit die Köderbox 1 einfach von der Befestigungseinrichtung 22 entnommen werden kann, erfolgt die Befestigung der Köderbox 1 an den halbschalenförmigen Haltern 26 mittels Gummibändern. Alternativ können die Halter 26 aber auch als Schraubschelle ausgebildet sein, so dass die Köderbox 1 besonders sicher befestigt ist.

Die Halteklammern 24 umgreifen formschlüssig an dem Schacht befestigte Steigeisen und fixieren dadurch die Köderbox 1 ortsfest in dem Schacht. Sowohl die Halterklammern 24 als auch der Adapter 25 sind verschiebbar an der Haltestange 23 befestigt, so dass die Befestigungseinrichtung 22 besonders flexibel in dem Schacht befestigt werden kann. Die Fixierung der Halteklammern 24 und des Adapters 25 an der Haltestange 23 erfolgt über Klemmschrauben. Die Befestigungseinrichtung 22 mit Haltestange 23, Halteklammern 24, Adapter 25 und Haltern 26 ist aus Edelstahl ausgebildet.

## Patentansprüche

1. Köderbox-Anordnung (18), umfassend eine Köderbox (1) mit einem rohrförmigen Gehäuse (2), welches an einer Seite (3) eine Einstiegsöffnung für Nagetiere aufweist und an der anderen Seite (4) durch einen Deckel (5) verschlossen ist, wobei dem Deckel (5) eine Aufnahmeeinrichtung (6) für Giftköder zugeordnet ist, wobei die Köderbox (1) mit einer Befestigungseinrichtung zum Befestigen der Köderbox (1) in einer abwassertechnischen Anlage versehen ist, mittels derer die Köderbox-Anordnung (18) derart in der abwassertechnischen Anlage montierbar ist, dass die eine Seite (3) dem Flüssigkeitsspiegel des in der abwassertechnischen Anlage geführten Abwassers zugewandt ist und dass die andere Seite (4) mit dem Deckel (5) samt Aufnahmeeinrichtung (6) in die entgegengesetzte Richtung weist, **dadurch gekennzeichnet, dass** das Gehäuse (2) zumindest zwei bogenförmige Abschnitte (8, 9) aufweist.

2. Köderbox-Anordnung nach Anspruch 1, **dadurch gekennzeichnet, dass** der Deckel (5) als Schraubdeckel ausgebildet ist.

3. Köderbox-Anordnung nach Anspruch 1 oder 2, **dadurch gekennzeichnet, dass** der Deckel (5) eine Dichtung zur Anlage an das Gehäuse (2) aufweist.

4. Köderbox-Anordnung nach einem der Ansprüche 1 bis 3, **dadurch gekennzeichnet, dass** der Deckel (5) außenseitig Formschlusselemente (16) aufweist.

5. Köderbox-Anordnung nach einem der Ansprüche 1 bis 4, **dadurch gekennzeichnet, dass** der Deckel (5) zumindest ein Halteelement (17) aufweist.

6. Köderbox-Anordnung nach einem der Ansprüche 1 bis 5, **dadurch gekennzeichnet, dass** eine Entnahmeeinheit (19) zum Entnehmen des Deckels (5) mit der Aufnahmeeinrichtung (6) vorgesehen ist.

7. Köderbox-Anordnung nach Anspruch 6, **dadurch gekennzeichnet, dass** die Entnahmeeinheit (19) so ausgebildet ist, dass diese formschlüssig in die Formschlusselemente (16) des Deckels (5) eingreift.

8. Köderbox-System nach Anspruch 6 oder 7, **dadurch gekennzeichnet, dass** die Entnahmeeinheit (19) zumindest ein weiteres Halteelement (20) aufweist.

9. Köderbox-Anordnung nach einem der Ansprüche 6 bis 8, **dadurch gekennzeichnet, dass** der Entnahmeeinheit (19) eine Stange (21) zugeordnet ist.

10. Köderbox-Anordnung nach Anspruch 9, **dadurch gekennzeichnet, dass** die Stange (21) teleskopierbar ist.

## Claims

1. Bait box arrangement (18), comprising a bait box (1) having a tubular housing (2) that comprises on one side (3) an entrance opening for rodents and that is closed on the other side (4) by means of a lid (5), wherein a receiving device (6) for poisonous bait is allocated to the lid (5), wherein the bait box (1) is provided with a fastening device for fastening the bait box (1) in a wastewater facility and it is possible by means of the fastening device to mount the bait box arrangement (18) in the wastewater facility in such a manner that the one side (3) is facing the fluid level of the wastewater that is guided in the wastewater facility and that the other side (4) points, with the lid (5) together with the receiving device (6), into the opposite direction, **characterised in that** the housing (2) comprises at least two curved sections (8, 9).

2. Bait box arrangement according to claim 1, **characterised in that** the lid (5) is embodied as a screw lid.

3. Bait box arrangement according to claim 1 or 2, **characterised in that** the lid (5) comprises a seal for the installation on the housing (2).

4. Bait box arrangement according to one of claims 1 to 3, **characterised in that** the lid (5) comprises positive-locking elements (16) on the outside.

5. Bait box arrangement according to one of claims 1 to 4, **characterised in that** the lid (5) comprises at least one holding element (17).

6. Bait box arrangement according to one of claims 1 to 5, **characterised in that** a removal unit (19) is provided for removal of the lid (5) with the receiving device (6).

7. Bait box arrangement according to claim 6, **characterised in that** the removal unit (19) is embodied so that it engages in a positive-locking manner into the positive-locking elements (16) of the lid (5).

8. Bait box system according to claim 6 or 7, **characterised in that** the removal unit (19) comprises at least one further holding element (20).

9. Bait box arrangement according to one of claims 6 to 8, **characterised in that** a rod (21) is allocated to the removal unit (19).

10. Bait box arrangement according to claim 9, **characterised in that** the rod (21) is telescopic.

## Revendications

1. Ensemble de casier à leurre (18) comprenant un casier à leurre (1) comportant un boîtier (2) tubuleux dont un côté (3) est pourvu d'une entrée pour rongeurs et dont l'autre côté (4) est fermé au moyen d'un couvercle (5), dans lequel un dispositif de réception (6) destiné à un leurre empoisonné est associé au couvercle (5), dans lequel l'ensemble de casier à leurre (18) peut être fixé dans un système de gestion des eaux usées de manière à ce que l'un côté (3) soit disposé face au niveau de liquide des eaux usées s'écoulant dans le dit système de gestion des eaux usées et que l'autre coté (4) comportant le couvercle (5) pourvu du dispositif de réception (6) soit tourné vers la direction opposée, **caractérisé en ce que** le boîtier (2) comporte au moins deux parties (8, 9) ayant la forme d'un arc.

2. Ensemble de casier à leurre selon la revendication 1, **caractérisé en ce que** le couvercle (5) est réalisé sous forme d'un couvercle à visser.

3. Ensemble de casier à leurre selon les revendications 1 ou 2, **caractérisé en ce que** le couvercle (5) est pourvu d'un joint d'étanchéité à placer sur le boîtier (2).

4. Ensemble de casier à leurre selon l'une des revendications 1 à 3, **caractérisé en ce que** la face extérieure du couvercle (5) est pourvue d'éléments d'engagement par complémentarité de forme (16).

5. Ensemble de casier à leurre selon l'une des revendications 1 à 4, **caractérisé en ce que** le couvercle (5) est pourvu d'au moins un élément de maintien (17).

6. Ensemble de casier à leurre selon l'une des revendications 1 à 5, **caractérisé en ce qu'**il est pourvu d'une unité de retrait (19) destinée à retirer le couvercle (5) avec le dispositif de réception (6).

7. Ensemble de casier à leurre selon la revendication 6, **caractérisé en ce que** l'unité de retrait (19) est réalisé de manière à ce qu'elle s'engage par complémentarité de forme dans les éléments d'engagement par complémentarité de forme (16) du couvercle (5).

8. Ensemble de casier à leurre selon les revendications 6 ou 7, **caractérisé en ce que** l'unité de retrait (19) comporte au moins un autre élément de maintien (20).

9. Ensemble de casier à leurre selon l'une des revendications 6 à 8, **caractérisé en ce qu'**une tige (21) est associée à l'unité de retrait (19).

10. Ensemble de casier à leurre selon la revendication 9, **caractérisé en ce que** la tige (21) peut être télescopée.
